# EUROPEAN PATENT APPLICATION

(11) **EP 0 891 110 A1**
(43) Date of publication of application: **13.01.1999**
(21) Application number: 97401656.0
(22) Date of filing: 10.07.1997
(51) Int. Cl.: H04Q 7/32

(54) **Method and system for preventing a mobile station from causing disturbance**

(71) Applicant: ALCATEL ALSTHOM COMPAGNIE GENERALE D'ELECTRICITE, 75008 Paris (FR)
(72) Inventor: Wilhlem, Michael, 71665 Vaihingen (DE)
(74) Representative: Knecht, Ulrich Karl, Dipl.-Ing.

(57) **Abstract**

Mobile stations like handsets could cause disturbance at electronic equipment, thereby endangering human lifes, and that's why the use of them sometimes at certain places is not allowed, for example inside planes during parts of a flight and inside hospitals. To prevent being dependent upon the user's decency, the possible use of the output of said handset could be deactivated by transmitting a deactivation signal from a base station to the handset, which deactivation signal either only deactivates said use for a predefined time-interval, or deactivates said use all the time until an activation signal originating from said base station has been received by said handset.

## Description

The invention relates to a method for preventing a mobile station causing disturbance.

Such a method is of common general knowledge and comprises the step of requesting mobile station users inside planes not to use their mobile stations during certain parts of the flight or forbidding mobile station users in certain areas of a hospital to use said equipment. In general, said use is not allowed in case the human well being could be endangered.

This known method is disadvantageous, inter alia, because of being based upon the user's decency.

It is an object of the invention, inter alia, to provide a method as described in the preamble which does not depend upon the user's decency.

Thereto, the method according to the invention is characterised in that the method comprises the steps of
- a base station transmitting a deactivation signal to said mobile station, and
- said mobile station, in response to said deactivation signal, deactivating a use of its output.

By deactivating at least the use of the output of the mobile station, it is no longer possible to transmit radio-frequency signals, which might cause disturbance. In this way, the mobile station is for 100% under control of the base station, and the decency of the user has become completely irrelevant.

The invention is based on the insight that each mobile station is partly controlled by a user side and partly controlled by a base station side, and that the entire control can be shifted theoretically to each one of both sides.

The method according to the invention thus solves the problem of a mobile station being able to cause disturbance by placing the mobile station under control of the base station and beyond the user's reach.

A first embodiment of the method according to the invention is characterised in that said deactivating takes place during a predefined time-interval, said base station repeating said transmitting until said deactivating no longer is necessary.

In this case the base station will have to repeat transmitting said deactivation signal until it is no longer necessary. In response to each deactivation signal, the mobile station deactivates the use of its output for said predefined time-interval. As soon as the base station has transmitted the last deactivation signal, the mobile station will, as soon as the last predefined time-interval has expired, be able to use its output again.

A second embodiment of the method according to the invention is characterised in that said deactivating takes place until receival by said mobile station of an activation signal originating from said base station, in response to which activation signal said mobile station no longer deactivates said use of its output.

In this case the base station will have to transmit only one deactivation signal, in response to which the mobile station deactivates the use of its output until the activation signal from the base station has been received. To prevent that the mobile station cannot be used anymore in case it has not properly received said activation signal, other base stations should for example also be able to transmit said activation signal.

In both cases the mobile station will have the option of, in response to a deactivation signal, either confirming the receival of said (de)activation signal (via a confirmation signal) or not confirming said receival. In response to said confirming and/or to said confirming failing to come, the base station could either respond or not respond.

Although it should not be excluded that said base station is an ordinary base station which, in addition to its usual functions, has been adapted for transmitting said (de)activation signal after being ordered to do so and/or which has been informed of the mobile stations that might cause disturbance and therefore transmits said (de)activation signal comprising a mobile station identification only to the identified mobile stations, in general said base station will be a base station which has been specifically designed for mainly transmitting said (de)activation signal either after being ordered to do so (for example by the staff of a plane during parts of the flight, in which case the base station will be located inside/outside said plane) or all the time (in which case for example the base station will be located inside/near a hospital).

The method according to the invention could be made more user-friendly by, incase the deactivation signal is received by the mobile station during a call, informing the users via a message. This message could either originate from said base station or from an other base station (in which case either the base station or the mobile station must inform the other base station of the interruption coming up) or from a memory inside the mobile station.

The invention further relates to a system comprising at least one base station and at least one mobile station.

The system according to the invention is characterised in that said base station comprises transmission means for transmitting a deactivation signal to said mobile station, and that said mobile station comprises receival means for receiving said deactivation signal and comprises deactivation means coupled to said receival means for, in response to said deactivation signal, deactivating a use of its output.

A first embodiment of the system according to the invention is characterised in that said base station comprises repetition means coupled to said transmission means for repeating said transmitting until said deactivating no longer is necessary, and that said mobile station comprises timing means coupled to said deactivation means for deactivating said use of its output during a predefined time-interval.

A second embodiment of the system according to the invention is characterised in that said base station comprises further transmission means for transmitting an activation signal to said mobile station, and that said mobile station comprises finish means coupled to said deactivation means for finishing said deactivating in response to said activation signal.

A third embodiment of the system according to the invention is characterised in that said mobile station comprises override means coupled to said deactivation means for overriding said deactivation signal for finishing said deactivating and comprises transmission means coupled to said override means for transmitting an override signal to said base station, and that said base station comprises receival means coupled to said transmission means for receiving said override signal for finishing said deactivating.

By offering specially selected people like police officers and/or fire personnel the possibility of making calls anyhow, in emergency situations the authorities can do what must be done.

A fourth embodiment of the system according to the invention is characterised in that said mobile station comprises at least one key and coupled to said deactivation means for being deactivated in response to said deactivation signal.

When for example the key (of a keyboard) for dialling a number can be blocked, the use of the output of the mobile station can be easily deactivated, without blocking the possibility of receiving information and of using the keyboard for calculations or memory purposes.

The invention yet further relates to a base station as defined in the system according to the invention.

The invention also relates to a mobile station as defined in the system according to the invention.

The invention will be explained in greater detail at the hand of embodiments disclosed in the drawings, whereby
figure 1 discloses a first system according to the invention comprising a first base station according to the invention and a first mobile station according to the invention, and
figure 2 discloses a second system according to the invention comprising a second base station according to the invention and a second mobile station according to the invention.

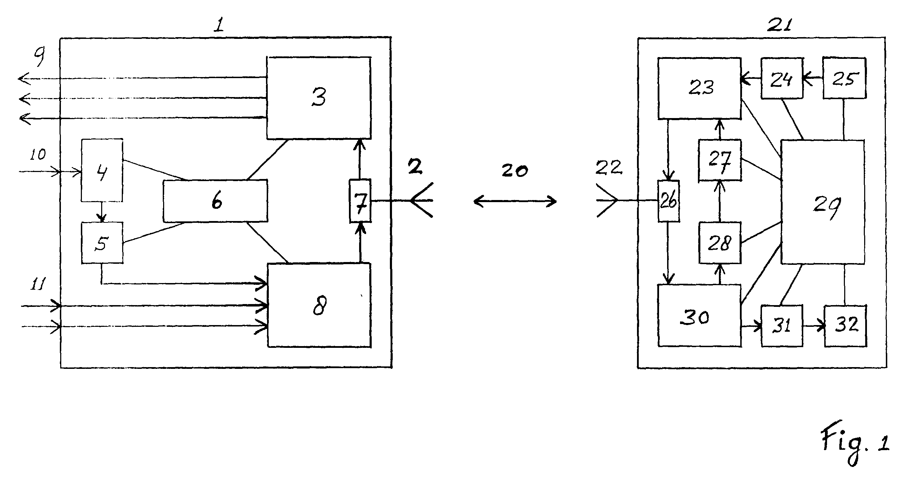

The first system according to the invention as disclosed in figure 1 comprises the first base station 1 according to the invention and the first mobile station 21 according to the invention. Base station 1 comprises an antennae 2 coupled to an in/output of a fork 7, of which an output is coupled to an input of a receiver 3 and of which an input is coupled to an output of a transmitter 8. An output of receiver 3 is coupled to connections 9 which are to be coupled to other parts of the mobile network like a base station controller or a mobile switching center. An input of transmitter 8 is coupled to connections 11 which are to be coupled to said other parts of the mobile network and to an output of generator 5. An input of generator 5 is coupled to an output of a switch 4, of which an input is coupled to a connection 10. Base station 1 further comprises a processor 6 coupled to switch 4, generator 5, receiver 3 and transmitter 8. Mobile station 21 comprises an antennae 22 coupled to an in/output of a fork 26, of which an input is coupled to an output of a transmitter 23 and of which an output is coupled to an input of a receiver 30. A first input of transmitter 23 is coupled to an output of a coder 24, of which an input is coupled to an output of a microphone 25. A first output of receiver 30 is coupled to an input of a decoder 31, of which an output is coupled to an input of a loudspeaker 32. A second output of receiver 30 is coupled to an input of a detector 28, of which an output is coupled to an input of a generator 27, of which an output is coupled to a second input of transmitter 23. Mobile station 21 further comprises control means 29 being provided with a processor, a display and a keyboard.

The system shown in figure 1 functions as follows. When the transmission output of all mobile stations in the vicinity of base station 1 like handset 21 must be placed under control of base station 1, a switch-on signal is supplied via connection 10 to switch 4, in response to which switch 4 supplies a generation signal to generator 5, which in response to that generates a (for example pulse shaped) deactivation signal for example every ten msec. or for example every one minute, which deactivation signal is transmitted via transmitter 8 and fork 7 and antennae 2 through channel 20 (signaling channel and/or speech/data channel). Handset 21 receives said deactivation signal via antennae 22 and fork 26 and receiver 30. Detector 28 detects each receival of each deactivation signal, and in response to that triggers generator 27 to generate each time a generation signal having a duration of for example twenty msec. or two minutes (in case a 100% safety margin is used), in response to which generation signal transmitter 23 deactivates the transmission output during the length of said generation signal. As a consequence of this, the transmission output of handset 21 and of all other mobile stations in the vicinity of base station 1 cannot be used, resulting in visitors of a restaurant or a cinema being able to enjoy a diner or a movie without being disturbed by people making phone calls all the time, in case said base station 1 is located inside/near said restaurant or said cinema.

Instead of said deactivation signal for example being pulse shaped, it could also have a certain value all the time, in which case in said handset 21 generator 27 could be avoided. Then detector 28 detects said deactivation signal and, during the presence of said deactivation signal, triggers transmitter 23 to deactivate the transmission output, etc. A disadvantage of said deactivation signal having said certain value all the time when deactivation is necessary is that each interruption of said deactivation signal immediately offers handset 21 the possibility of transmission. The combination of said pulse shaped deactivation signal and said 100% safety margin is more advantageous due to the fact that the missing of one pulse of said deactivation signal still does not result in handset 21 getting the possibility of said transmission. A combination of said deactivation signal having a certain value and said generator 27 being used of course results in an operation which is extremely failsafe.

Base station 1 also comprises said receiver 3 coupled to connections 9 as well as comprises said transmitter 8 coupled to connections 11 for, in general, handling calls. Therefore, base station 1 is a so-called ordinary base station which has been extended with said generator 5 for generating said deactivation signal. Said switch-on signal for example originates from a timing clock, which causes the deactivation signal to be generated during the evening or the playing time of a movie. The transmission power of said base station should, when transmitting the deactivation signal, be such that only the transmission output of handsets inside/very near the restaurant or the cinema is deactivated, when handling calls said output power could be increased. According to other embodiments, switch 4 is a manual switch controlled by the restaurant staff or the cinema staff. Said switch-on signal could further originate from a fixed or mobile telephone exchange, as a result of a call comprising a personal identification code (pincode) and/or certain adjustment codes.

Partly contrary to the above, base station 1 could also be a special base station that has been designed for mainly transmitting deactivation signals. In general, such a base station will not comprise connections 9 and the couplings between receiver 3 and said connections 9 and will not comprise connections 11 and the couplings between transmitter 8 and said connections 11. Further, in some cases receiver 3 and fork 7 could be omitted, and switch 4 could be omitted in case the deactivation signal must be transmitted all the time, like for example inside a hospital near a surgery room. A possible difference between ordinary base stations and special base stations respectively could be the ability and disability respectively to handle ordinary calls, or could be the output power being increased/decreased and being kept at the same level respectively.

Said deactivation signal will deactivate the transmission output of each mobile station which is in the vicinity of said base station. According to an other embodiment, said deactivation signal comprises for example an International Mobile Subscriber Identification code or IMSI code, which has been supplied to said base station by maintenance personnel or by a certain handset during communication between said certain handset and said base station, as a consequence of which for example the output of only said certain handset defined by said IMSI code will be deactivated. As an alternative, it could be possible to transmit previously stored IMSI codes together with the deactivation signal, which IMSI codes define handsets of which the transmission output should not be deactivated, for example because of being owned by the authorities. Instead of receiving said IMSI codes, these handsets could also be provided with an override mechanism, for example by using a special push-button resulting in said control means 29 controlling transmitter 23 and/or generator 27 and/or detector 28 in such a way that the result of said deactivation signal is nullified.

As an extra feature, information could be sent to a handset user to warn said user of the deactivation soon to be started, for example after a predefined timeperiod. Said extra feature could be embodied in at least three different ways.

According to a first extra embodiment, said information is transmitted from base station 1 to handset 21 via the same deactivation signal, in which case in handset 21 said information could be detected by detector 28, which for example informs a unit of control means 29, resulting in for example a message shown on said display and/or an acoustic warning generated via said loudspeaker 32. To give said user some time to for example finish a call, for example detector 28 or generator 27 should be provided with delay means for delaying said deactivation.

According to a second extra embodiment, said information is transmitted from base station 1 to handset 21 via a further signal preceding said deactivation signal, in which case in handset 21 said further signal comprising said information could be detected by detector 28, which for example informs a unit of control means 29, resulting in for example a message shown on said display and/or an acoustic warning generated via said loudspeaker 32. To give said user some time to for example finish a call, now in base station 1, for example switch 4 or generator 5 should be provided with delay means for delaying the transmission of said deactivation signal.

According to a third extra embodiment, said information is transmitted from an other base station not shown in figure 1 to handset 21 via a further signal preceding said deactivation signal originating from said base station 1, in which case in handset 21 said further signal comprising said information could be detected by detector 28, which for example informs a unit of control means 29, resulting in for example a message shown on said display and/or an acoustic warning generated via said loudspeaker 32. This embodiment of course requires a coupling between both base stations for exchanging data, whereby said user should be given some time to for example finish a call, by said delay means inside one of both base stations or somewhere in between for delaying the transmission of said deactivation signal with respect to the transmission of said further signal.

When a handset is involved in a call and said deactivation signal and/or said further signal and/or said information arrives and is received, all of said possibilities could be used, because of each one of them solely being a solution to this problem.

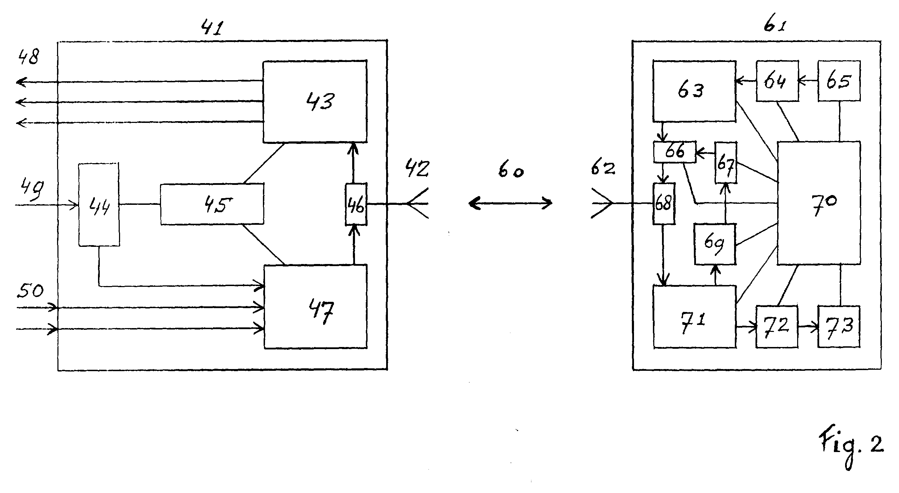

The second system according to the invention as disclosed in figure 2 comprises the second base station 41 according to the invention and the second mobile station 61 according to the invention. Base station 41 comprises an antennae 42 coupled to an in/output of a fork 46, of which an output is coupled to an input of a receiver 43 and of which an input is coupled to an output of a transmitter 47. An output of receiver 43 is coupled to connections 48 which are to be coupled to other parts of the mobile network like a base station controller or a mobile switching center. An input of transmitter 47 is coupled to connections 50 which are to be coupled to said other parts of the mobile network and to an output of pulse-generator 44. An input of pulse-generator 44 is coupled to a connection 49. Base station 41 further comprises a processor 45 coupled to pulse-generator 44, receiver 43 and transmitter 47. Mobile station 61 comprises an antennae 62 coupled to an in/output of a fork 68, of which an input is coupled to an output of a first switch 66 and of which an output is coupled to an input of a receiver 71. A first input of first switch 66 is coupled to an output of a transmitter 63 and a second input of first switch 66 is coupled to an output of a second switch 67. An input of transmitter 63 is coupled to an output of a coder 64, of which an input is coupled to an output of a microphone 65. A first output of receiver 71 is coupled to an input of a decoder 72, of which an output is coupled to an input of a loudspeaker 73. A second output of receiver 71 is coupled to an input of a detector 69, of which an output is coupled to an input of second switch 67. Mobile station 61 further comprises control means 70 being provided with a processor, a display and a keyboard.

The system shown in figure 2 functions as follows. When the transmission output of all mobile stations in the vicinity of base station 41 like handset 61 must be placed under control of base station 41, a switch-on signal is supplied via connection 49 to pulse-generator 44, which in response to that generates one (for example pulse shaped) deactivation signal, which deactivation signal is transmitted via transmitter 47 and fork 46 and antennae 42 through channel 60 (signalling channel and/or speech/data channel). Handset 61 receives said deactivation signal via antennae 62 and fork 68 and receiver 71. Detector 69 detects the receival of said deactivation signal, and in response to that triggers second switch 67 to block all signals originating from control means 70, in response to which first switch 66 interrups all signals originating from transmitter 63 for deactivating the transmission output. As a consequence of this, the transmission output of handset 61 and of all other mobile stations in the vicinity of base station 41 cannot be used.

As soon as the transmission output of all mobile stations in the vicinity of base station 41 like handset 61 no longer needs to be controlled by base station 41, a switch-off signal is supplied via connection 49 to pulse-generator 44, which in response to that generates one (for example pulse shaped) activation signal (like for example a second deactivation signal being equal to said first deactivation signal), which activation signal is transmitted via transmitter 47 and fork 46 and antennae 42 through channel 60. Handset 61 receives said activation signal via antennae 62 and fork 68 and receiver 71. Detector 69 detects the receival of said activation signal, and in response to that triggers second switch 67 to let all signals originating from control means 70 pass through, in response to which first switch 66 no longer interrups all signals originating from transmitter 63 and said transmission output can be activated. As a consequence of this, the transmission output of handset 61 and of all other mobile stations in the vicinity of base station 41 can again be used.

The interruption of signals originating from transmitter 63 by first switch 66 can be regarded to be dependently or independently from second switch 67: in the first case second switch 67 is present and for example blocks or passes keyboard signals, and in the second case second switch 67 could be omitted. Or switch 66 and 67 could be integrated into one switch having one or more functions.

For both systems disclosed in figures 1 and 2 there exists the possibility of the handset either confirming or not confirming the receival of one or more deactivation signals and activation signals. In case of confirmation, at the base station side there is an advantage of acknowledgement, with at the handset side a disadvantage of the necessity of transmission of a confirmation signal. In case of no confirmation, at the base station side there is a disadvantage of not having acknowledgement, with at the handset side an advantage of not having the necessity of transmission of a confirmation signal. For both systems it should not be excluded that after deactivation of transmission outputs of handsets they still have the possibility of receiving information like short data messages or reports of incoming calls that have not been answered, etc. Further, other options are also possible, like allowing or not allowing the handset to generate a ringing signal after deactivation of its transmission output, and like defining or not defining how to handle a possible collision of base station signals, which collision for example could be solved by introducing priority codes, etc.

Said mobile stations could each also comprise a combination of a handset (an ordinary one or an adapted one comprising at least an antennae, receiver and detector) and a personal computer (pc) or a compact-disk-player (cd-player) etc. In such a combination, said handset is coupled to said pc or cd-player, and said deactivation of a use of the handset's output this time corresponds to deactivating said pc or cd-player or, in general, electronic equipment. Of course, said deactivation of a use of the handset's output could further comprise the deactivation of the (radio) transmission output. In the near future, for example in planes, it could become a regulation to either temporarily yield (inside/near the plane) each ordinary pc or ordinary cd-player, or to use said combination of receiver/detector and electronic equipment. In case of a combination comprising a cd-player, the information warning the user of the coming deactivation could be generated acoustically via an ear-phone. In case of a combination comprising a pc, the information warning the user of the coming deactivation could be generated visibly via a monitor.

## Claims

1. Method for preventing a mobile station causing disturbance, characterised in that the method comprises the steps of
- a base station transmitting a deactivation signal to said mobile station, and
- said mobile station, in response to said deactivation signal, deactivating a use of its output.

2. Method according to claim 1, characterised in that said deactivating takes place during a predefined time-interval, said base station repeating said transmitting until said deactivating no longer is necessary.

3. Method according to claim 1, characterised in that said deactivating takes place until receival by said mobile station of an activation signal originating from said base station, in response to which activation signal said mobile station no longer deactivates said use of its output.

4. System comprising at least one base station and at least one mobile station, characterised in that said base station comprises transmission means for transmitting a deactivation signal to said mobile station, and that said mobile station comprises receival means for receiving said deactivation signal and comprises deactivation means coupled to said receival means for, in response to said deactivation signal, deactivating a use of its output.

5. System according to claim 4, characterised in that said base station comprises repetition means coupled to said transmission means for repeating said transmitting until said deactivating no longer is necessary, and that said mobile station comprises timing means coupled to said deactivation means for deactivating said use of its output during a predefined time-interval.

6. System according to claim 4, characterised in that said base station comprises further transmission means for transmitting an activation signal to said mobile station, and that said mobile station comprises finish means coupled to said deactivation means for finishing said deactivating in response to said activation signal.

7. System according to claim 4, 5 or 6, characterised in that said mobile station comprises override means coupled to said deactivation means for overriding said deactivation signal for finishing said deactivating and comprises transmission means coupled to said override means for transmitting an override signal to said base station, and that said base station comprises receival means coupled to said transmission means for receiving said override signal for finishing said deactivating.

8. System according to claim 4, 5, 6 or 7, characterised in that said mobile station comprises at least one key and coupled to said deactivation means for being deactivated in response to said deactivation signal.

9. Base station as defined in the system according to any one of claims 4-7.

10. Mobile station as defined in the system according to any one of claims 4-8.
